# EUROPEAN PATENT SPECIFICATION

(11) **EP 0 478 142 B1**
(45) Date of publication and mention of the grant of the patent: **08.03.1995**
(21) Application number: 91307821.8
(22) Date of filing: 27.08.1991
(51) Int. Cl.: H02K 29/00, H02K 7/10

(54) **Brushless motor**
Bürstenloser Motor
Moteur sans balais

(30) Priority: 29.08.1990 JP 90859/90 U; 31.08.1990 JP 231898/90
(43) Date of publication of application: 01.04.1992
(73) Proprietor: MATSUSHITA ELECTRIC INDUSTRIAL CO., LTD., Kadoma-shi Osaka (JP)
(72) Inventor: Hasegawa, Makoto, Yonago-shi (JP); Kubo, Kenji, Ikomi-shi (JP); Noguchi, Naoto, Hirakata-shi (JP); Imai, Toshio, Neyagawa-shi (JP)
(74) Representative: Sorrell, Terence Gordon

(56) References cited:
- EP-A- 0 388 965
- US-A- 4 839 551
- PATENT ABSTRACTS OF JAPAN vol. 11, no. 204 (E-520)(2651), 2 July 1987 & JP-A-6225659
- PATENT ABSTRACTS OF JAPAN vol. 10, no. 95 (E-395)(2152), 12 April 1986 & JP-A-60237845
- PATENT ABSTRACTS OF JAPAN vol. 11, no. 81 (E-488)(2528), 12 March 1987 & JP - A - 61236352

## Description

The present invention relates to a brushless motor, particularly a flat brushless motor having a short axial length for use in a compact electrical device.

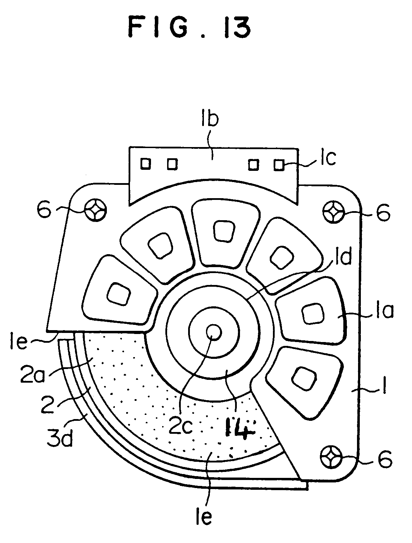

As shown in Fig. 12, a conventional brushless motor used in a compact tape recorder has a body 101 including a stator coil, a rotor including permanent magnets and a sub-rotor. A rotor shaft 102 projects axially outwardly from the body 101, and a pulley 103 is mounted on the rotor shaft 102 on the outside of the body 101 so that output power of the brushless motor can be transmitted by a belt 104 wound on the pulley 103.

An object of the present invention is to provide a brushless motor which has a small axial length although still including an output means for transmitting output power to the outside of the motor.

A brushless motor having a small axial length is disclosed in the applicant's earlier European patent application No. 90105452.8, published on 26 september 1990 under publication No. EP-A-0388965. This application claims a priority date of 22 March 1989 from Japanese application No. 69728/89 published on 8 October 1990 under No. JP-A-2250653. The brushless motor of both these applications includes some of the features of the present invention comprising a substantially flat stator means located between a disc-shaped rotor means including permanent magnets arranged circumferentially thereon and a sub-rotor means comprising a disc-shaped member. The amendment disclosed in these documents is shown in Figure 11.

Since Japanese application No. 69728/89 was filed before the two applications from which the present application claims priority, the priority applications for the present application do not constitute the first filing for these features which must therefore be examined for novelty and inventive step reasons at the date of filing of the present application. Consequently, these features are known from the earlier European application and its Japanese priority application.

A brushless motor having a small axial length is also known from Patent Abstracts of Japan, Vol. 11, No. 204 (E-520) (2651) and patent specification JP-A-6225859. However, whilst the brushless motor of this disclosure includes a substantially flat stator located between a disc-shaped rotor means including permanent magnets and a disc-shaped sub-rotor, a rotor pulley formed integrally with the rotor means for transmitting power from the motor is located to the exterior of the motor. Therefore the axial length of the motor is greater than it need be.

According to the present invention, a brushless motor comprises a disc-shaped rotor means which is rotatable about an axis of the motor and which includes permanent magnets arranged circumferentially thereon; an output means connected to the rotor means to be rotatable therewith; a substantially flat stator means which opposes the rotor means and which includes electro-magnetic coils capable of being energised in order to rotate the rotor means; and a sub-rotor means fixed to the output means and which includes permanent magnets arranged thereon such that the N poles thereof face S poles of the permanent magnets of the rotor means and the S poles thereof face N poles of the permanent magnets of the rotor means across the stator means, wherein the stator means has a first space formed at a central portion thereof which receives the output means therein and a second space which extends substantially perpendicularly to the axis of the motor from the first space to an outside edge of the stator means so that output power of the brushless motor can be transmitted from the output means to the outside of the motor through the second space.

Since the stator means has a first space formed at a central portion thereof to receive the output means therein and a second space which extends substantially perpendicularly to the axis of the motor from the first space to an outside edge of the stator means so that output power of the motor can be transmitted to the outside of the motor through the second space, an axial distance between the stator means and the output means is almost zero, an axial distance between the output means and the rotor means is very small, and an axial distance between the output means and a magnetically energized field between the stator means and the rotor means is also very small. Therefore, the axial length of the brushless motor is very small, and the capacity of a bearing for rotatably supporting the rotor means and the output means in relation to the stator and for accurately maintaining the space for the magnetically energized field between the stator means and the rotor means need only be small.

Fig. 1 is a cross-sectional view taken along line 1-1 of Fig. 2 to show an embodiment of a flat brushless motor according to the present invention.

Fig. 2 is a front view of the embodiment of Fig. 1.

Fig. 3 is a side view of the embodiment of Fig. 1.

Fig. 4 is a front view of an embodiment of a stator according to the present invention.

Fig. 5 is a schematic front view of an arrangement of permanent magnets on a rotor.

Fig. 6 is a front view of an arrangement of the stator, the rotor and a pulley.

Fig. 7 is a front view of an arrangement of the rotor and the pulley

Fig. 8 is a diagram of a control device for energizing, in order, electro-magnetic coils of the stator.

Fig. 9 is a schematic view of a structure for mounting the stator and terminal members of the stator.

Fig. 10 is a cross-sectional view of another embodiment of the present invention.

Fig. 11 is a cross-sectional view of the motor disclosed in EP-A- 0 388 965.

Fig. 12 is a side view of a conventional brushless motor.

Fig. 13 is a front view of an arrangement of the stator, the rotor and a gear.

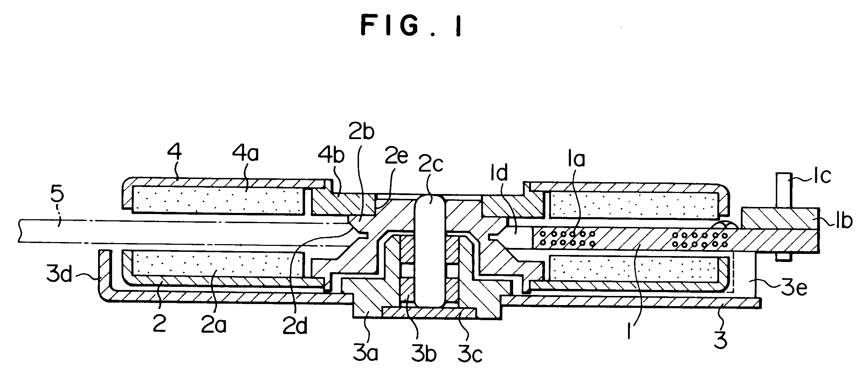

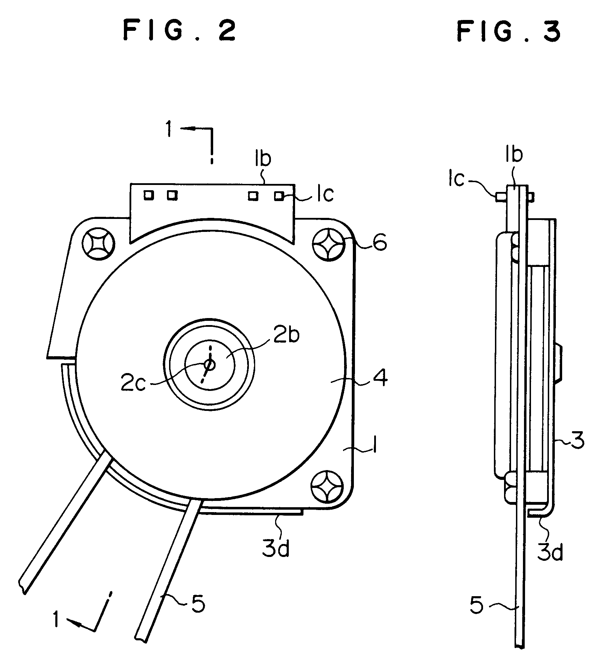

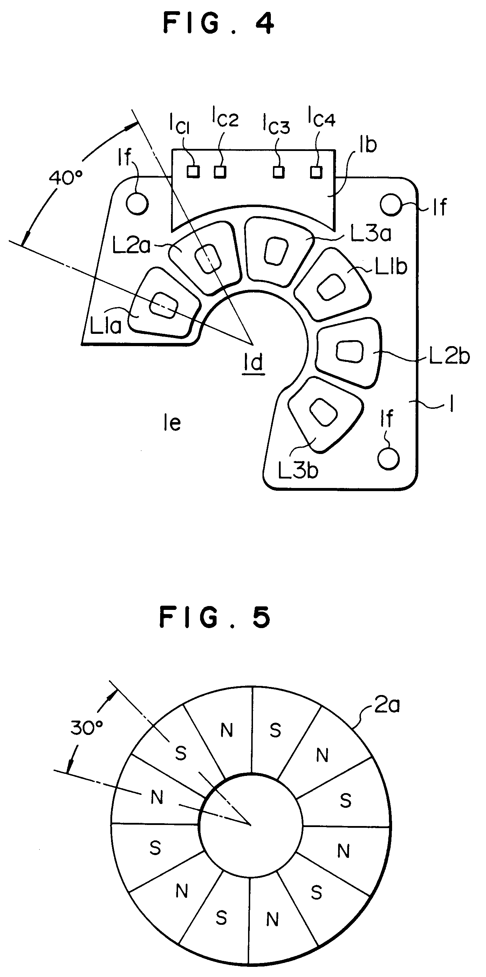

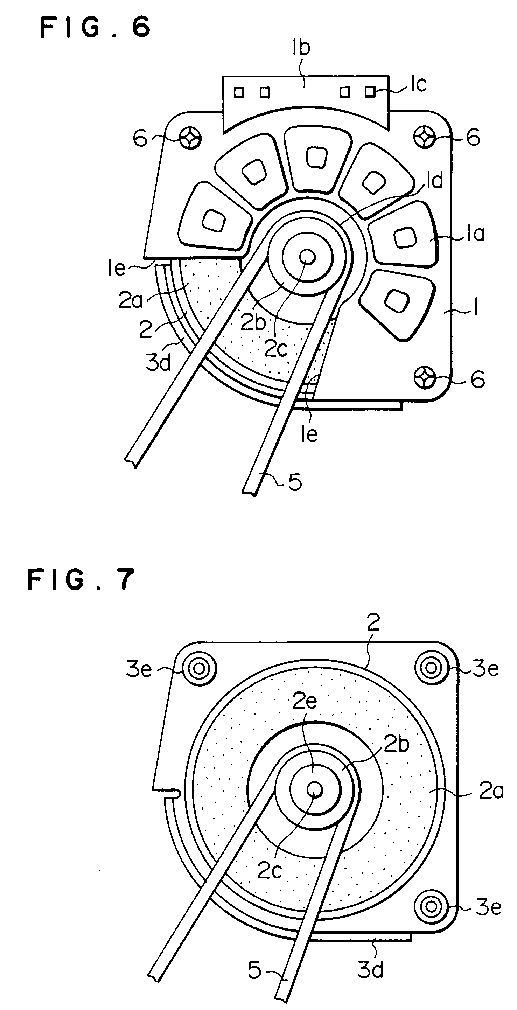

As shown in Figs. 1 to 7, an embodiment of a flat brushless motor according to the present invention includes a stator 1 having electro-magnetic driving coils la. At an outer edge of the stator 1 is a terminal holding member lb including terminals lc. A first space ld of the stator 1 is formed at a central portion thereof. As shown in Fig. 4, the driving coils la comprising L1a, L1b, L2a, L2b, L3a and L3b, whose coil turns may be substantially equal to each other to form respective magnetic flux densities identical to each other, are arranged on a circular line angularly separated by 40 degrees. Alternatively, the total coil turns of L1a and L1b, the total coil turns of L2a and L2b, and the total coil turns of L3a and L3b may be equal to each other so that the respective magnetic flux densities of these three phases are equal to each other. The three-phase driving combinations of L1a-L1b, L2a-L2b and L3a-L3b are energized in order such that an energized field rotates along the circular line. A second space 1e of the stator 1 extends between L1a and L3b. Each of the three-phase driving combinations has the same number of driving coils 1a, that is, two so that the driving forces of said driving combinations are substantially equal to each other. Therefore, a driving force is always constant.

A disc-shaped rotor 2 is rotatable on an axis of the brushless motor and has permanent magnets 2a facing the driving coils la of the stator 1 with a magnetically energized axial clearance therebetween. The permanent magnets 2a comprise twelve poles which are arranged circumferentially on the rotor 2 angularly separated by 30 degrees, as shown in Fig. 5. A pulley 2b is fixed to the rotor 2 and a central axis of the pulley 2b aligns with that of the rotor 2. The pulley 2b is mounted on a shaft 2c such that the pulley 2b is rotatably supported through the shaft 2c by a bearing 3a fixed to a bracket 3. The pulley 2b has a V-shaped belt groove 2d formed in an outer periphery thereof, and has a cylindrical projection 2e.

The bearing 3a has a radial bearing 3b and a thrust bearing 3c. The bracket 3 has a magnetic shield plate 3d which is made of a magnetically conductive material which extends around an outer periphery of the brushless motor so that an electromagnetic field generated by the stator 1 is prevented from acting on an electronic device, for example, a tuner circuit or amplifier circuit or a magnetic head. The stator 1 is supported on the bracket 3 by screws 6 through a plurality of support columns 3e.

A sub-rotor 4 is fixed to the pulley 2b by means of a holder member 4b fixed to the projection 2e of the pulley 2b so that the sub-rotor 4 and the rotor 2 are rotatable about the axis of the brushless motor. The sub-rotor 4 has permanent magnets 4a which are the same as the permanent magnets 2a and face the driving coils 1a of the stator 1 with a magnetically energized axial clearance therebetween so that the stator 1 is arranged between the sub-rotor 4 and the rotor 2. N poles of the rotor 2 fact S poles of the sub-rotor 4 through the stator 1, and S poles of the rotor 2 face N poles of the sub-rotor 4 through the stator 1. The holder member 4b extends radially outwardly from the projection 2e of the pulley 2b so that a diameter of the first space 1d is small although an inner diameter of the sub-rotor 4 is large. The magnetically energized clearance between the permanent magnets 4a of the sub-rotor 4 and the driving coils 1a of the stator 1 is substantially equal to the magnetically energized clearance between the permanent magnets 2a of the rotor 2 and the driving coils la of the stator 1 so that a magnetic force in an axial direction between the sub-rotor 4 and the stator 1 is substantially equal to a magnetic force in the axial direction between the rotor 2 and the stator 1. Therefore, a force in the axial direction does not act on the stator 1 and movement or deformation of the stator 1 in the axial direction is prevented. If a magnetomotive force of the permanent magnets 4a is different from that of the permanent magnets 2a, the magnetically energized clearance between the sub-rotor 4 and the stator 1 and the magnetically energized clearance between the rotor 2 and the stator 1 is adjusted to make the magnetic force in the axial direction between the sub-rotor 4 and the stator 1 substantially equal to the magnetic force in the axial direction between the rotor 2 and the stator 1. That is, when the magnetomotive force of the permanent magnets 4a is smaller than that of the permanent magnets 2a, the magnetically energized clearance between the sub-rotor 4 and the stator 1 is made smaller than the magnetically energized clearance between the rotor 2 and the stator 1 so that a magnetic flux density of the permanent magnets 2a is made substantially equal to a magnetic flux density of the permanent magnets 4a, and when the magnetomotive force of the permanent magnets 4a is larger than that of the permanent magnets 2a, the magnetically energized clearance between the sub-rotor 4 and the stator 1 is made larger than the magnetically energized clearance between the rotor 2 and the stator 1 so that a magnetic flux density of the permanent magnets 2a is made substantially equal to a magnetic flux density of the permanent magnets 4a.

A belt 5 is wound on the belt groove 2d of the pulley 2b in the first space 1d and passes through the second space 1e so that output power of the brushless motor can be transmitted to the outside of the motor. A gear 14 may be fixed to the rotor 2 instead of the pulley 2b and may engage with another gear (not shown) which is rotatable on an axis to the outside of the motor and is arranged in the second space 1e so that the output power of the brushless motor can be transmitted to the outside of the motor through the second space 1e, as shown in Fig. 13, even though the pulley 2b or the gear 14 envelopes the stator 1. Since the pulley 2b or the gear 14 for transmitting the output power of the brushless motor to the outside of the brushless motor envelopes the stator 1, the size of the brushless motor, particularly the axial length, is small, and a moment, which is generated by the pulley 2b or the gear 14 for transmitting the output power to the outside of the brushless motor and by the stator 1 for driving the rotor 2 and the sub-rotor 4 and which is born by the bearing 3a, is small.

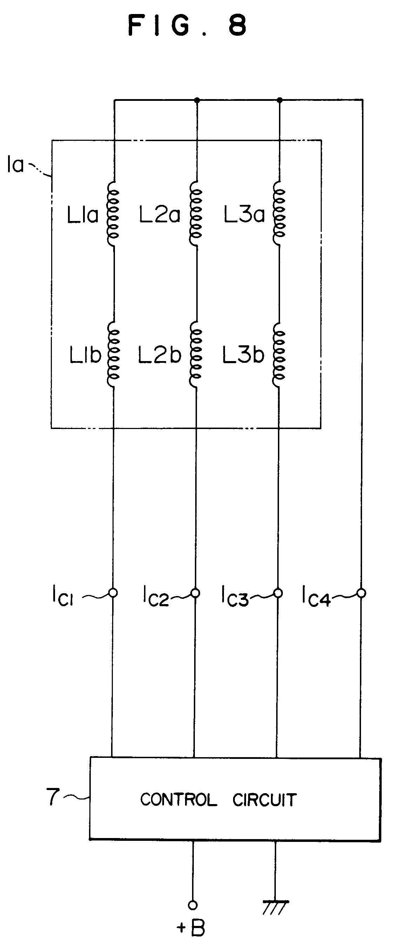

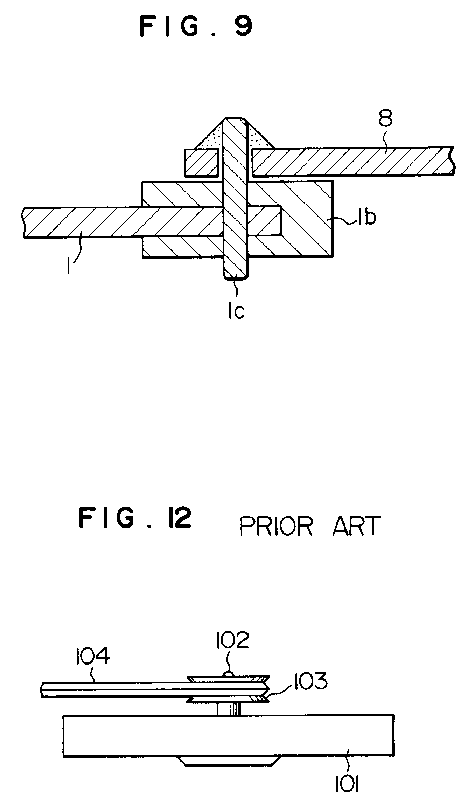

As shown in Fig. 8, the coils L1a and L1b are connected in series to a terminal 1c1, the coils L2a and L2b are connected in series to a terminal 1c2, the coils L3a and L3b are connected in series to a terminal 1c3, and the combinations of the coils L1a- L1b, L2a-L2b and L3a- L3b are connected together to a terminal 1c4 so that the three-phase driving combinations of L1a-L1b, L2a-L2b and L3a-L3b can be energized, in order, by a control circuit 7 to rotate the rotor 2 and the sub-rotor 4. As shown in Fig. 9, since the terminals 1c of the stator 1 project outwardly from the terminal holder member 1b, the stator 1 can be easily connected to a printed circuit board 8.

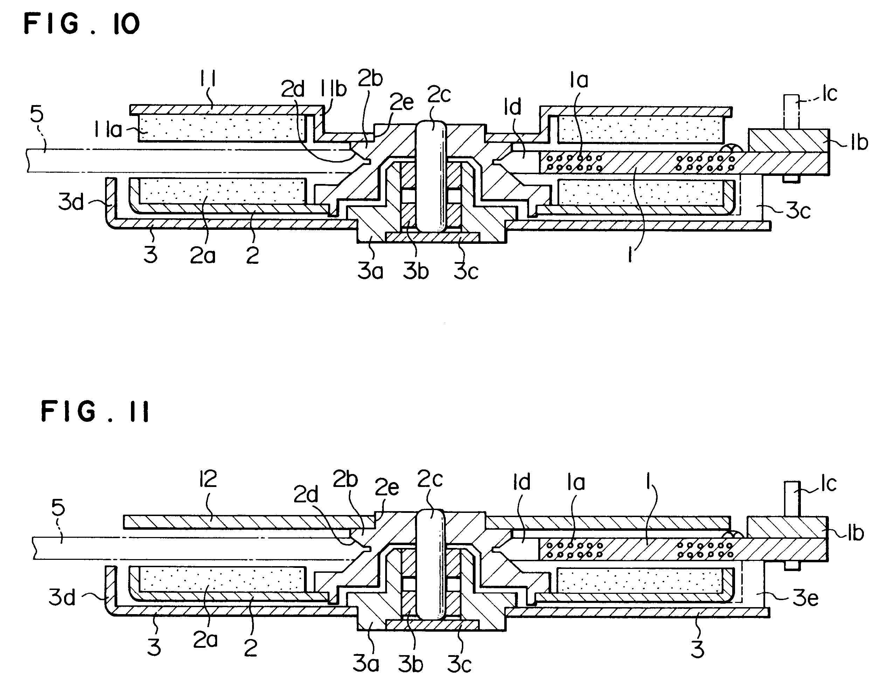

As shown in Fig. 10, a sub-rotor 11 includes permanent magnets 11a which are the same as the permanent magnets 2a or 4a comprising twelve magnetic poles, and may be directly fixed to the projection 2e of the pulley 2b on the rotor 2 without the holder member 4b through a central recess 11b of the sub-rotor 11. A depth of the recess 11b is determined in such a manner that a magnetically energized clearance between the sub-rotor 11 and the stator 1 is substantially equal to the magnetically energized clearance between the rotor 2 and the stator 1. An inner diameter of an opening of the recess 11b is equal to that of the holder member 4b so that the sub-rotor 4 can be easily exchanged for the sub-rotor 11. N poles of the rotor 2 face S poles of the sub-rotor 11 through the stator 1, and S poles of the rotor 2 face N poles of the sub-rotor 11 through the stator 1 so that the sub-rotor 4 and the rotor 2 are rotated in accordance with changes in energization of the coils 1a of the stator 1.

As shown in Fig. 11, the motor disclosed in EP-A-0 388 965 includes a sub-rotor comprising a flat-sub-rotor 12 made of a magnetically conductive material, for example, iron. The sub-rotor 12 can be fixed to the projection 2e of the pulley 2b on the rotor 2 without the holder member 4b. An inner diameter of an opening of the sub-rotor 12 is equal to that of the holder member 4b so that the sub-rotor 4 can be easily exchanged for the sub-rotor 12 or each of the other various sub-rotors having a common opening diameter. A magnetically energized clearance between the sub-rotor 12 and the stator 1 is substantially equal to the magnetically energized clearance between the permanent magnets 2a of the rotor 2 and the stator 1.

The coils 1a may be made by an etching process or by a plating process, and the sheet-shaped coils 1a made on a surface of the stator 1 by an etching process or by a plating process may be securely fixed to the surface of the stator 1 by an electric insulating material covering said sheet-shaped coils 1a.

## Claims

1. A brushless motor comprising: a disc-shaped rotor means (2) which is rotatable about an axis of the motor and which includes permanent magnets (2a) arranged circumferentially thereon; an output means (2b) connected to the rotor means (2) to be rotatable therewith; a substantially flat stator means (1) which opposes the rotor means (2) and which includes electromagnetic coils (1a) capable of being energised in order to rotate the rotor means; and a sub-rotor (4,11) means fixed to the output means (2b) and which includes permanent magnets (4a,11a) arranged thereon such that the N poles thereof face S poles of the permanent magnets (2a) of the rotor means (2) and the S poles thereof face N poles of the permanent magnets (2a) of the rotor means across the stator means (1), wherein the stator means (1) has a first space (1d) formed at a central portion thereof which receives the output means (2b) therein and a second space (1e) which extends substantially perpendicularly to the axis of the motor from the first space (1d) to an outside edge of the stator means so that output power of the brushless motor can be transmitted from the output means (2b) to the outside of the motor through the second space (1e).

2. A brushless motor according to claim 1, characterised in that the output means (2b) is a pulley (2b).

3. A brushless motor according to claim 1, characterised in that the output means (2b) is a gear (14).

4. A brushless motor according to any of claims 1 to 3, characterised in that the electro-magnetic coils (1a) of the stator means (1) are made by an etching process.

5. A brushless motor according to any of claims 1 to 3, characterised in that the electro-magnetic coils (1a) of the stator means (1) are made by a plating process.

6. A brushless motor according to any preceding claim, characterised in that the coils (1a) of the stator means (1) form a plurality of series of connected groups (L1a,L1b; L2a,L2b; L3a,L3b), each group being energised by a phase of a control circuit (7) and the number of coil turns in each group is equal.

7. A brushless motor according to any preceding claim, characterised in that a magnetomotive force of the permanent magnets (4a,11a) of the sub-rotor means (4,11) is substantially equal to that of the rotor means (2).

8. A brushless motor according to any of claims 4 and 5, characterised in that the electro-magnetic coils (1a) of the stator means (1) are covered by an electric insulating material in order to fix them securely to the stator means.

9. A brushless motor according to claim 7, characterised in that a magnetically energized axial clearance between the permanent magnets (4a,11a) of the sub-rotor means (4,11) and the electro-magnetic coils (1a) of the stator means (1) is substantially equivalent to a magnetically energized axial clearance between the permanent magnets (2a) of the rotor means (2) and the electro-magnetic coils (1a) of the stator means (1).

## Patentansprüche

1. Bürstenloser Motor, umfassend: eine scheibenförmige Rotoreinrichtung (2), die um eine Achse des Motors drehbar ist und an ihrem Umfang angeordnete Permanentmagneten (2a) beinhaltet; eine Leistungsabgabeeinrichtung (2b), die mit der Rotoreinrichtung (2) so verbunden ist, daß sie mit dieser drehbar ist; eine im wesentlichen flache Statoreinrichtung (1), die der Rotoreinrichtung (2) gegenüberliegt und elektromagnetische Spulen (1a) beinhaltet, die erregt werden können, um die Rotoreinrichtung in Umdrehung zu versetzen; und eine an der Leistungsabgabeeinrichtung (2b) befestigte Subrotoreinrichtung (4, 11), die an dieser dergestalt angeordnete Permanentmagneten (4a, 11a) umfaßt, daß die N-Pole derselben den S-Polen der Permanentmagneten (2a) der Rotoreinrichtung (2) und die S-Pole derselben den N-Polen der Permanentmagneten (2a) der Rotoreinrichtung quer durch die Statoreinrichtung (1) gegenüberliegen, wobei die Statoreinrichtung (1) einen in einem Mittelabschnitt derselben ausgebildeten ersten Raum (1d) hat, der die Leistungsabgabeeinrichtung (2b) aufnimmt, und einen zweiten Raum (1e), der im wesentlichen senkrecht zu der Achse des Motors von dem ersten Raum (1d) zu einem Außenrand der Statoreinrichtung verläuft, so daß die abgegebene Leistung des bürstenlosen Motors von der Leistungsabgabeeinrichtung (2b) durch den zweiten Raum (1e) zur Außenseite des Motors abgegeben werden kann.

2. Bürstenloser Motor gemäß Anspruch 1, dadurch gekennzeichnet, daß die Leistungsabgabeeinrichtung (2b) eine Riemenscheibe (2b) ist.

3. Bürstenloser Motor gemäß Anspruch 1, dadurch gekennzeichnet, daß die Leistungsabgabeeinrichtung (2b) ein Zahnrad (14) ist.

4. Bürstenloser Motor gemäß einem der Ansprüche 1 bis 3, dadurch gekennzeichnet, daß die elektromagnetischen Spulen (1a) der Statoreinrichtung (1) durch einen Ätzprozeß hergestellt sind.

5. Bürstenloser Motor gemäß einem der Ansprüche 1 bis 3, dadurch gekennzeichnet, daß die elektromagnetischen Spulen (1a) der Statoreinrichtung (1) durch einen Metallisierungsprozeß hergestellt sind.

6. Bürstenloser Motor gemäß einem der vorstehenden Ansprüche, dadurch gekennzeichnet, daß die Spulen (1a) der Statoreinrichtung (1) mehrere Reihen von verbundenen Gruppen (L1a, L1b; L2a, L2b; L3a, L3b) bilden, wovon jede Gruppe durch eine Phase einer Steuerschaltung (7) erregt wird, und die Zahl der Spulenwindungen in jeder Gruppe gleich ist.

7. Bürstenloser Motor gemäß einem der vorstehenden Ansprüche, dadurch gekennzeichnet, daß eine magnetomotorische Kraft der Permanentmagneten (4a, 11a) der Subrotoreinrichtung (4, 11) im wesentlichen gleich derjenigen der Rotoreinrichtung (2) ist.

8. Bürstenloser Motor gemäß einem der Ansprüche 4 und 5, dadurch gekennzeichnet, daß die elektromagnetischen Spulen (1a) der Statoreinrichtung (1) durch ein elektrisch isolierendes Material bedeckt sind, um sie sicher an der Statoreinrichtung zu befestigen.

9. Bürstenloser Motor gemäß Anspruch 7, dadurch gekennzeichnet, daß ein magnetisch erregter axialer Abstand zwischen den Permanentmagneten (4a, 11a) der Subrotoreinrichtung (4, 11) und den elektromagnetischen Spulen (1a) der Statoreinrichtung (1) im wesentlichen gleich einem magnetisch erregten axialen Abstand zwischen den Permanentmagneten (2) der Rotoreinrichtung (2) und den elektromagnetischen Spulen (1a) der Statoreinrichtung (1) ist.

## Revendications

1. Un moteur sans balai comprenant: un élément rotor en forme de disque (2) pouvant tourner sur un axe dudit moteur et comprenant des aimants permanents (2a) disposés sur sa circonférence; un élément d'entrainement (2b) solidaire de l'élément rotor (2) et tournant avec lui; un élément stator (1) essentiellement plat s'opposant à l'élément rotor (2) et incluant des bobinages électromagnetiques (1a) pouvant être mis sous tension électrique afin de faire tourner l'élément rotor; et un élément sous-rotor (4, 11) fixé sur l'élément d'entrainement (2b) et comprenant des aimants permanents (4a, 11a) disposés dessus de telle sorte que ses pôles N font face aux pôles S des aimants permanents (2a) de l'élément rotor (2) et que ses pôles S font face aux pôles N des aimants permanents (2a) de l'élément rotor tout le long de l'élément stator (1), alors que l'élément stator (1) comporte un premier espace (1d) dans sa partie centrale qui reçoit l'élément d'entrainement (2b) et un second espace (1e) disposé essentiellement de façon perpendiculaire à l'axe du moteur depuis le premier espace (1d) jusqu'à un bord externe de l'élément stator de sorte que la puissance d'entrainement du moteur sans balai puisse être transmise de l'élément d'entrainement (2b) jusqu'à l'extérieur du moteur par l'intermédiaire du second espace (1e).

2. Un moteur sans balai selon la revendication 1, caractérisé en ce que l'élément d'entrainement (2b) est une poulie (2b).

3. Un moteur sans balai selon la revendication 1, caractérisé en ce que l'élément d'entrainement (2b) est un engrenage (14).

4. Un moteur sans balai selon l'une quelconque des revendications 1 à 3, caractérisé en ce que les bobinages électromagnétiques (1a) de l'élément stator (1) sont réalisés selon un procédé de gravure.

5. Un moteur sans balai selon l'une quelconque des revendications 1 à 3, caractérisé en ce que les bobinages électromagnétiques (1a) sont réalisés selon un procédé de placage.

6. Un moteur sans balai selon l'une quelconque des revendications précédentes, caractérisé en ce que les bobinages (1a) de l'élément stator (1) forment plusieurs séries de groupes connectés (L1a, L1b; L2a, L2b; L3a, L3b), chaque groupe recevant du courant par une phase d'un circuit de commande (7) et en ce que le nombre de tours de bobinage de chaque groupe est égal.

7. Un moteur sans balai selon l'une quelconque des revendications précédentes, caractérisé en ce qu'une force électromagnétique des aimants permanents (4a, 11a) de l'élément sous-rotor (4, 11) est essentiellement égale à celle de l'élément rotor (2).

8. Un moteur sans balai selon l'une quelconque des revendications 4 et 5, caractérisé en ce que les bobinages électromagnétiques (1a) de l'élément stator (1) sont recouverts d'un matériau isolant électrique afin d'assurer leur fixation sur l'élément stator.

9. Un moteur sans balai selon la revendication 7, caractérisé en ce qu'un espace axial et énergisé magnétiquement entre les aimants permanents (4a, 11a) de l'élément sous-rotor (4, 11) et les bobinages électromagnétiques (1a) de l'élément stator (1) est substantiellement équivalent à l'espace axial et énergisé magnétiquement entre les aimants permanents (2a) de l'élément rotor (2) et les bobinages électromagnétiques (1a) de l'élément stator (1).
